## Europäisches Patentamt
## European Patent Office
## Office européen des brevets

(11) Veröffentlichungsnummer: **0 059 509**
**B1**

(12)

# EUROPÄISCHE PATENTSCHRIFT

(45) Veröffentlichungstag der Patentschrift:
05.12.84

(51) Int. Cl.³: **C 04 B 7/44, F 27 B 7/20**

(21) Anmeldenummer: **82200218.4**

(22) Anmeldetag: **23.02.82**

(54) Verfahren zur Herstellung von Zementklinker.

(30) Priorität: **28.02.81 DE 3107710**

(43) Veröffentlichungstag der Anmeldung:
**08.09.82 Patentblatt 82/36**

(45) Bekanntmachung des Hinweises auf die Patenterteilung:
**05.12.84 Patentblatt 84/49**

(84) Benannte Vertragsstaaten:
**AT BE CH DE FR GB IT LI LU NL SE**

(56) Entgegenhaltungen:
**DE - A - 2 712 238**
**DE - B - 1 767 628**
**DE - B - 2 344 094**
**FR - A - 2 200 217**
**FR - A - 2 221 416**
**FR - A - 2 275 418**

(73) Patentinhaber: **METALLGESELLSCHAFT AG,
Reuterweg 14 Postfach 3724, D-6000 Frankfurt/M.1 (DE)**
Patentinhaber: **CREUSOT-LOIRE ENTREPRISES, 33,
quai Gaïlléni, F-92150 Suresnes (FR)**
Patentinhaber: **LAFARGE COPPEE, 28, rue Emile
Ménier, F-75782 Paris Cedex (FR)**
Patentinhaber: **Folliot, Albert, 8, rue Darcel,
F-92 100 Boulogne (FR)**

(72) Erfinder: **Schmidt, Hans Werner, Dr., Wormser Strasse 8,
D-6000 Frankfurt am Main (DE)**
Erfinder: **Beisswenger, Hans, Freillgrathstrasse 2,
D-6232 Bad Soden (DE)**
Erfinder: **Reh, Lothar, Dr., Stettiner Strasse 3,
D-6000 Frankfurt am Main (DE)**
Erfinder: **Folliot, Albert, 8, rue Darcel, F-92100 Boulogne
(FR)**
Erfinder: **Pallard, Maurice, 16, rue Morinet,
F-71100 Chalon-sur-Saone (FR)**

(74) Vertreter: **Fischer, Ernst, Dr., Reuterweg 14,
D-6000 Frankfurt am Main 1 (DE)**

**Beschreibung**

Die Erfindung betrifft ein Verfahren zur Herstellung von Zementklinker durch Vorwärmen des Zementrohmehles in einem Suspensionswärmeaustauscher, Entsäuerung in einer Wirbelschicht, Klinkerung in einem Drehrohrofen und anschliessende Kühlung des Klinkers.

Zur Herstellung von Zementklinker ist es allgemein üblich, Zementrohmehl im Suspensionswärmeaustauscher von mechanischem und chemisch gebundenem Wasser zu befreien sowie zu einem gewissen Teil zu entsäuern und dann die weitere Entsäuerung und Klinkerung im Drehrohrofen vorzunehmen.

Diese Arbeitsweise bedeutet, dass die Entsäuerung zu einem wesentlichen Teil in den Drehrohrofen verlagert wird, was insbesondere bei hohen Durchsatzleistungen mit dem beträchtlichen Nachteil grosser und anlagetechnisch ungünstiger Drehrohrofenabmessungen verbunden ist.

Es hat daher nicht an Bemühungen gefehlt, die Entsäuerung des Zementrohmehles möglichst weitgehend vor dessen Eintritt in den Drehrohrofen herbeizuführen. Hierzu wurde beispielsweise die unterste Stufe des Suspensionswärmeaustauschers gesondert mit Brennstoff beaufschlagt, um eine weitere Erhitzung und Entsäuerung des Rohmaterials zu erzielen (DE-B 2 324 565). Die Wirksamkeit dieser Arbeitsweise ist jedoch beschränkt, da die Verweilzeit des Rohmaterials im Bereich der erhöhten Temperatur nur kurz ist.

Eine Weiterentwicklung in der Herstellung von Zementklinker besteht darin, eine möglichst weitgehende Entsäuerung des Rohmaterials in einer separaten Vorrichtung, die zwischen Suspensionswärmeaustauscher und Drehrohrofen geschaltet ist, herbeizuführen. Hierfür sind eine beheizbare Förderstrecke, die das aus dem Suspensionswärmeaustauscher austretende Rohmaterial einem dem Drehrohrofen vorgeschalteten Zyklon zuführt (FR-A 2 197 827), oder ein Wirbelschichtreaktor, der das Rohmaterial über eine Rauchkammer und einen Zyklon in den Drehrohrofen einträgt (DE-B 2 344 094), bekannt. In beiden Fällen ist die zur hinreichenden Entsäuerung erforderliche Verweilzeit, insbesondere wegen der üblicherweise unterschiedlichen Körnung des Rohmaterials, nur schwer einstellbar. Auch bereitet der Austrag des Grobkornes Schwierigkeiten.

Aufgabe der vorliegenden Erfindung ist es, ein Verfahren bereitzustellen, das die Nachteile der bekannten insbesondere vorgenannten Verfahren vermindert und das eine praktisch vollständige Entsäuerung des Zementrohmehles vor dem Eintrag in den Drehrohrofen gestattet und mit apparativ vertretbarem Aufwand durchführbar ist.

Die Aufgabe wird gelöst, indem das Verfahren der eingangs genannten Art entsprechend der Erfindung derart ausgestaltet wird, dass man

die Entsäuerung in einem aus einem Wirbelschichtreaktor 5, einem Abscheider 6 und einer Rückführleitung 7 gebildeten Zirkulationssystem bei einer Temperatur oberhalb 850°C mit einem Entsäuerungsgrad von mindestens 95% durchführt;

den für den Brenn- und Klinker-Prozess erforderlichen kohlenstoffhaltigen Brennstoff zu mindestens 65% (bezogen auf den Gesamtwärmebedarf) dem Wirbelschichtreaktor 5 und zu mindestens 10% (bezogen auf den Gesamtwärmebedarf) dem Drehrohrofen 13 zuführt;

die Verbrennung des dem Wirbelschichtreaktor 5 zugeführten Brennstoffes mit mindestens zwei Teilströmen sauerstoffhaltigen Gases, von denen einer als Fluidisierungsgas 8 und einer in einer höheren Ebene als Sekundärgas 9 zugegeben wird, zweistufig und — auf die Gesamtheit der Verbrennungsstufen bezogen — nahstöchiometrisch durchführt und durch Aufteilung der Fluidisierungsgas- und der Sekundärgasmengen sowie durch Einstellung des Volumenverhältnisses von Fluidisierungsgas zu Sekundärgas innerhalb des Bereiches von 1:1 bis 1:10 in der Zone zwischen Fluidisierungsgaszuführung 8 und Sekundärgaszuführung 9 eine mittlere Suspensionsdichte von 100 bis 300 kg/m³ und in der Zone oberhalb der Sekundärgaszuführung 9 eine mittlere Suspensionsdichte von 5 bis 30 kg/m³ einstellt.

Im Wirbelschichtreaktor des aus Wirbelschichtreaktor, Abscheider und Rückführleitung gebildeten Zirkulationssystems herrscht ein Wirbelzustand, bei dem — im Unterschied zur «klassischen» Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und darüber befindlichem Staubraum ist nicht vorhanden; jedoch nimmt innerhalb des Reaktors die Feststoffkonzentration von unten nach oben ständig ab.

Zwar ist aus der DE-B 1 767 628 ein Verfahren zur Durchführung endothermer Prozesse, u.a. zum Brennen bestimmter Zementrohmehlsorten, bekannt, bei dem man das dem Prozess zu unterwerfende Material in einem mehrstufigen Schwebeaustauscher vorentwässert und/oder erhitzt, über einen Abscheider einem Wirbelschichtofen, dem ein Rückführzyklon zugeordnet ist, zuleitet und schliesslich des Reaktionsproduktes dem aus Wirbelschichtofen und Rückführzyklon gebildeten Kreislauf entnimmt und einem mehrstufigen Wirbelkühler aufgibt, bei dem also das Prinzip der sogenannten «zirkulierenden Wirbelschicht» Anwendung findet. Hierbei erfolgt jedoch der Vorgang der Entsäuerung und des Klinkerns gemeinsam in der Wirbelschicht. Dies hat für den speziellen Anwendungsfall den Nachteil, dass die Entsäuerung bei den hierfür an sich nicht erforderlichen hohen Klinkertemperaturen durchgeführt wird, dadurch hohe Abgasvolumina hoher Temperatur auftreten und entsprechend hohe Brennstoffmengen aufgewendet werden müssen. Ein weiterer bei verschiedenen Einsatzstoffen auftretender Nachteil ist, dass die Produktqualität nicht so hoch ist, als wenn Entsäuerung und Klinkerung in zwei getrennten Stufen durchgeführt würden.

Bei Definition der Betriebsbedingungen des erfindungsgemässen Verfahrens über die Kennzahlen von Froude und Archimedes ergeben sich die Bereiche:

$$0,5 \leq 3/4 \cdot F_r^2 \cdot \frac{\rho_g}{\rho_k - \rho_g} \leq 50$$

bzw.

$$0,01 \leq AR \leq 10$$

wobei

$$Ar = \frac{d_k{}^3 \cdot g(\rho_k - \rho_g)}{\rho_g \cdot \nu^2}$$

und

$$F_r{}^2 = \frac{u^2}{g \cdot d_k}$$

ist.

Es bedeuten:

u die relative Gasgeschwindigkeit in m/sec
Ar die Archimedeszahl
$\rho_g$ die Dichte des Gases in kg/m³
$\rho_k$ die Dichte des Feststoffteilchens in kg/m³
$d_k$ den Durchmesser des kugelförmigen Teilchens in m
$\nu$ die kinematische Zähigkeit in m²/sec
g die Gravitationskonstante in m/sec²
$F_r$ die Froude-Zahl

Die überwiegende Menge des dem Wirbelschichtreaktor zuzuführenden Brennstoffes wird unterhalb der Sekundärgaszuführung zugegeben. Hierdurch und durch die Aufteilung der insgesamt zur Verbrennung erforderlichen sauerstoffhaltigen Gase auf zwei in unterschiedlicher Höhe zugeführte Teilströme wird eine zweistufige «weiche» Verbrennung erzielt, so dass im Wirbelschichtreaktor lokale Überhitzungserscheinungen vermieden werden. Ausserdem wird die Entstehung von Stickoxiden stark, z.B. auf Werte unter 100 ppm, zurückgedrängt.

Der Wirbelschichtreaktor kann von rechteckigem, quadratischem oder kreisförmigem Querschnitt sein. Der untere Bereich des Wirbelschichtreaktors kann auch konisch ausgebildet sein, was insbesondere bei grossen Reaktorquerschnitten vorteilhaft ist.

Die im Wirbelschichtreaktor oberhalb der Sekundärgaszuführung herrschenden Gasgeschwindigkeiten liegen bei Normaldruck im Regelfall über 5 m/sec und können bis zu 15 m/sec betragen.

Das Verhältnis von Durchmesser zu Höhe des Wirbelschichtreaktors sollte derart gewählt werden, dass Gasverweilzeiten von 0,5 bis 8,0 sec, vorzugsweise 1 bis 4 sec, erhalten werden.

Zweckmässigerweise wird das Sekundärgas, das auch in mehreren Ebenen und unterhalb jeder Eintragsebene durch mehrere Zuführungsöffnungen zugegeben werden kann, in einer Höhe von 30% (bezogen auf die Gesamthöhe des Wirbelschichtreaktors), mindestens jedoch 1 m über der Einleitung des Fluidisierungsgases, zugeführt. Sofern das Sekundärgas in mehreren Ebenen zugeführt wird, sollte die Lage der obersten Sekundärgasleitung die erwähnten 30% der Reaktorhöhe nicht überschreiten. Diese Höhe schafft einerseits einen hinreichend grossen Raum für die erste Verbrennungsstufe mit nahezu vollständiger Umsetzung zwischen kohlenstoffhaltigem Material und sauerstoffhaltigem Fluidisierungsgas und gewährleistet andererseits, dass im oberen, über der Sekundärgaszuführung liegenden Reaktionsraum der Sauerstoff entsprechend dem gewählten stöchiometrischen Verhältnis umgesetzt wird.

Als Brennstoff kann Heizöl, Kohle, insbesondere Braunkohle, Kohle mit hohem Aschegehalt, wie Waschberge, Ölschiefer und gegebenenfalls Hausmüll, eingesetzt werden. Für die Klinkerstufe empfiehlt sich die Verwendung eines heizwertreichen Brennstoffes.

Hinsichtlich der Brennstoffaufteilung ist es besonders zweckmässig, den für den Brenn- und Klinker-Prozess erforderlichen Brennstoff zu 70 bis 85% (bezogen auf den Gesamtwärmebedarf) dem Wirbelschichtreaktor und zu 15 bis 30% (bezogen auf den Gesamtwärmebedarf) dem Drehrohrofen zuzuführen. Der dem Drehrohrofen zugeführte Brennstoff dient im wesentlichen dazu, die Aufheizung des aus dem Wirbelschichtreaktor austretenden Materialstromes und die Kompensation der Abstrahlungsverluste des Drehrohrofens zu bewirken.

Um die mindestens 95%ige Entsäuerung des Rohmaterials zu erzielen, wird dessen Verweilzeit vorzugsweise auf 3 bis 15, insbesondere 5 bis 10 Minuten eingestellt. Unter Berücksichtigung der einzustellenden Temperatur im Zirkulationssystem, die vorteilhafterweise im Bereich von 950 bis 1150°C liegen sollte, lassen sich so praktisch alle Rohmaterialien, selbst bei breitem Kornspektrum und grober Körnung, erfolgreich verarbeiten. Die im Zirkulationssystem herrschende Temperaturkonstanz sowie die definierten Feststoffverweilzeiten führen zudem zu einer grossen Homogenität des entsäuerten Produktes.

Sofern ein fester kohlenstoffhaltiger Brennstoff eingesetzt werden soll, empfiehlt es sich, die Körnung auf einen mittleren Teilchendurchmesser von < 500 $\mu$m, vorzugsweise auf einen Wert im Bereich von 100 bis 300 $\mu$m, einzustellen. Der mittlere Teilchendurchmesser ist derart definiert, dass 50 Gew.-% über und 50 Gew.-% des Materials unter dem jeweiligen Wert liegen.

Die Klinkerung des kalzinierten Zementrohmehles im Drehrohrofen erfolgt unter an sich bekannten Bedingungen bei Temperaturen von ca. 1300 bis 1450°C.

In vorteilhafter Weiterbildung der Erfindung wird die Kühlung des fertigen Zementklinkers unter Aufheizung von sauerstoffhaltigem Gas, das mindestens teilweise dem Wirbelschichtreaktor zugeleitet wird, vorgenommen, wobei man das sauerstoffhaltige Gas in weiterer bevorzugter Ausgestaltung sowohl direkt als auch indirekt aufheizt.

Als Kühlaggregat kommen Kühler bekannter Bauart in Betracht, z.B. Schachtkühler oder Rostkühler, insbesondere deren Kombination.

Aus verfahrensökonomischen Gründen empfiehlt es sich dabei, einen Teil des bei der Kühlung des Klinkers indirekt aufgeheizten sauerstoffhaltigen Gases dem Wirbelschichtreaktor als Fluidisierungsgas und mindestens einen Teil des bei der Kühlung des Klinkers aufgeheizten sauerstoffhaltigen Gases dem Wirbelschichtreaktor als Sekundärgas zuzuführen. Ein gegebenenfalls verbleibender Gasstrom kann dem Suspensionswärmeaustauscher zugeführt werden.

Der Abgasstrom des Zirkulationssystems wird üblicherweise quantitativ dem Suspensionswärmeaustauscher zugeleitet. Der Abgasstrom des Drehrohrofens kann ebenfalls dem Suspensionswärmeaustauscher aufgegeben werden. Enthält das Zementrohmehl hingegen höhere Gehalte verflüchtigbarer Alkalien, so sollte — je nach Alkaligehalt — ein kleinerer oder grösserer Teilstrom am Suspensionswärmeaustauscher vorbeigeführt werden. Im Extremfall, d.h. bei besonders hohen Alkaligehalten, ist eine 100%ige Bypass-Führung angebracht.

Die herausragenden Vorteile des erfindungsgemässen Verfahrens sind: im Zirkulationssystem kann die Rohmaterialverweilzeit sehr genau eingestellt und kontrolliert werden, so dass praktisch keine Schwankungen im Entsäuerungsgrad des Rohmaterials auftreten. Ausserdem herrscht im Zirkulationssystem eine praktisch gleichmässige Temperatur, d.h., es werden Temperaturspitzen, die zu an dieser Stelle unerwünschten Verflüchtigungsreaktionen führen können, vermieden. Das Zirkulationssystem gewährleistet weiterhin einen konstanten Materialfluss in den Drehrohrofen, wodurch eine hohe Klinkerqualität erzielt wird. Der hohe Entsäuerungsgrad im Zirkulationssystem entlastet den Drehrohrofen, so dass dort praktisch nur noch das Klinker-Brennen erfolgt. Seine Abmessungen können daher klein gehalten werden, was letztlich auch mit einer Energieersparnis infolge verringerter Wärmeabstrahlung verbunden ist.

Das Verfahren gestattet die Verwendung minderwertiger Brennstoffe und einen geringen Aufmahlungsgrad der einzusetzenden Ausgangsstoffe. Bei Einsatz von Ausgangsstoffen, die zu sogenanntem «Naturzement» führen (Ausgangsstoffe mit einer homogenen Mischung der zementbildenden Komponenten), ist eine noch geringere Aufmahlung erforderlich. Bei Vorliegen alkalireicher Ausgangsstoffe, die eine Bypass-Führung erforderlich machen, sind die Wärmeverluste durch verringerte, aus der Klinkerstufe stammende Gase geringer.

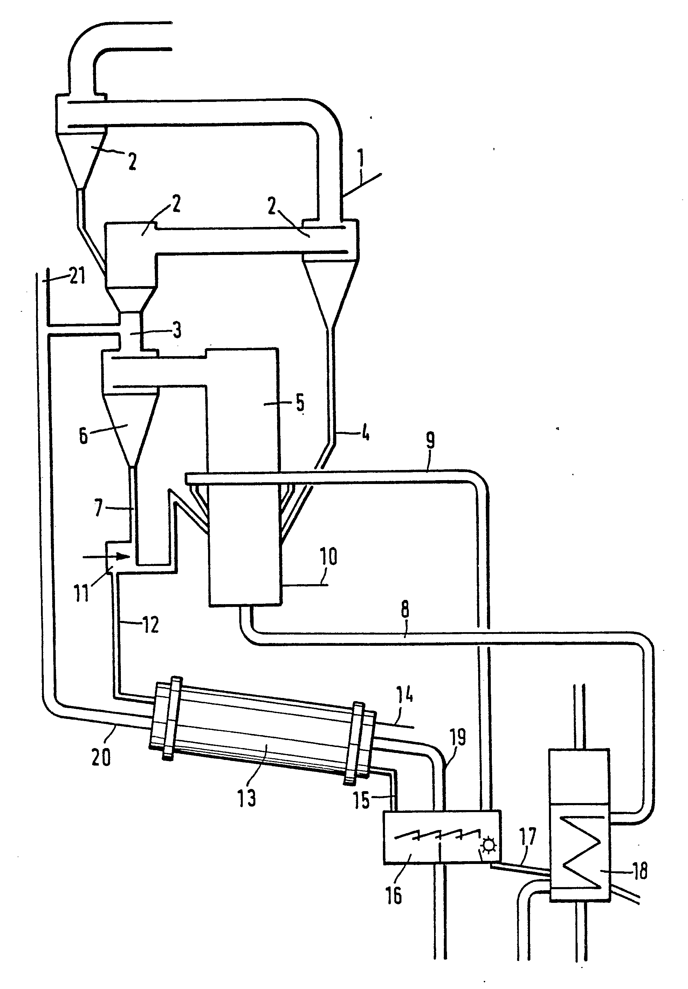

Die Erfindung wird anhand der Figur und der Ausführungsbeispiele beispielsweise und näher erläutert.

Das Zementrohmehl wird bei 1 dem Suspensionswärmeaustauscher 2 (vereinfachte Darstellung mit 2 Zyklonabscheidern und einem Venturiwirbler) aufgegeben und nach Vorwärmung durch die bei 3 aus dem Zirkulationssystem austretenden Abgase über Leitung 4 zur Kalzination dem Zirkulationssystem zugeführt.

Das Zirkulationssystem besteht aus dem Wirbelschichtreaktor 5, dem Abscheidezyklon 6 und der Rückführleitung 7. Der Wirbelschichtreaktor 5 wird über Leitung 8 mit Fluidisierungsgas und über Leitung 9, die in Nähe des Wirbelschichtreaktors 5 zweckmässigerweise als Ringleitung ausgebildet ist, mit Sekundärgas versorgt. Der Eintrag des Brennstoffes erfolgt über Lanze 10.

Über die mit einem Spiess geregelte Entnahmevorrichtung 11 wird mittels Leitung 12 ein kontinuierlicher Materialfluss abgezweigt und dem Drehrohrofen 13 zugeführt. Hierin erfolgt die Klinkerung durch Aufheizung mittels vergleichsweise geringer Mengen Brennstoff, der über Lanze 14 eingetragen wird.

Der fertige Zementklinker wird dann über Leitung 15 einem Rostkühler mit Zerkleinerungsvorrichtung 16 und über Leitung 17 einem Schachtkühler 18 zugeleitet. Im Schachtkühler 18 erfolgt der Entzug von Wärme unter Aufheizung eines Gasstromes, der dem Wirbelschichtreaktor 5 über Leitung 8 als Fluidisierungsgas zugeführt wird. Die im Rostkühler 16 aufgeheizte Luft wird zunächst dem Drehrohrofen 13 über Leitung 19 aufgegeben. Das Abgas des Drehrohrofens 13 gelangt·schliesslich über Leitung 20 in den Suspensionswärmeaustauscher 2.

Über Leitung 21 kann im Bedarfsfall ein Teilstrom des Abgases des Drehrohrofens 13 — im Extremfall der gesamte Gasstrom — am Suspensionswärmeaustauscher 2 vorbeigeführt werden. Dieses Abgas wird dann üblicherweise in einem Gaskühler (nicht dargestellt) gekühlt und gereinigt.

*Beispiel 1*

Über Aufgabevorrichtung 1 wurden dem Suspensionswärmeaustauscher 2 3,1 t/h Zementrohmehl mit einem mittleren Teilchendurchmesser von 30 $\mu$m aufgegeben. Das Zementrohmehl bestand aus:

    2,40 t Kalkstein    ($CaCO_3$)
    0,25 t Quarzsand    ($SiO_2$)
    0,45 t Ton          (alkalireich).

Es wurde durch das aus dem Zirkulationssystem bei 3 austretende Abgas von 1000°C im Suspensionswärmeaustauscher 2 auf ca. 800°C vorgewärmt und dann über Leitung 4 in den Wirbelschichtreaktor 5 eingetragen. Dem Wirbelschichtreaktor 5 wurden weiterhin über Leitung 10 0,5 t/h Kohle mit einem mittleren Korndurchmesser von 200 $\mu$m und einem Heizwert $H_u$ von 12 MJ/kg sowie über Leitungen 8 und 9 560 $m_N^3$/h Fluidisierungsgas von 420°C bzw. 1320 $m_N^3$/h Sekundärgas von 720°C aufgegeben.

Im aus Wirbelschichtreaktor 5, Zyklonabscheider 6 und Rückführleitung 7 gebildeten Zirkulationssystem stellte sich eine Temperatur von 1000°C ein. Aufgrund der Menge und Aufteilung der Gasströme ergab sich im Wirbelschichtreaktor 5 unterhalb der Sekundärgaszuführung 9 eine mittlere Suspensionsdichte von 150 kg/$m^3$ und oberhalb der Sekundärgaszuführung 9 eine solche von 10 kg/$m^3$. Die mittlere Verweilzeit im Zirkulationssystem lag bei 8 min und der Entsäuerungsgrad bei 99,2%.

Über die Entnahmevorrichtung 11 wurden 2 t/h kalziniertes Zementrohmehl entnommen und dem Drehrohrofen 13 zugeführt. Der Drehrohrofen wurde ausserdem über Lanze 14 mit 0,047 t/h Kohle mit einer Körnung von 20% > 90 $\mu$m und einem Heizwert $H_u$ von 25 MJ/kg sowie über Leitung 19 mit 290 $m_N^3$/h Luft, die im Rostkühler 16 auf 1090°C aufgeheizt worden war, beaufschlagt. Die Maximaltemperatur im Drehrohrofen 13 betrug 1400°C. Anschliessend wurde der Klinker über Leitung 15 in den Rostkühler 16 eingetragen und dort mit insgesamt 1610 $m_N^3$/h Luft direkt gekühlt. Die aufgeheizte Luft wurde — wie vorstehend beschrieben — auf Drehrohrofen 13 und über Leitung 9 zugeführte Sekundärluft aufgeteilt. Die weitere Kühlung des Klinkers erfolgte im Schachtkühler 18 durch indirekte Aufheizung von Luft in Mengen von 560 $m_N^3$/h, die dann dem Wirbelschichtreaktor 5 als Fluidisierungsgas mit einer Temperatur von 420°C zugeführt wurde. Die Klinker-Produktion betrug 2 t/h.

Das den Drehrohrofen 13 verlassende Abgas wurde infolge seines hohen Alkaligehaltes zu 100% am Suspensionswärmeaustauscher 2 vorbeigeführt und in einem Gaskühler (nicht dargestellt) gekühlt und gereinigt.

*Beispiel 2*

Zum Einsatz kam ein Naturzement bildender Ausgangsstoff, d.h. ein Einsatzmaterial, das die für die Zementherstellung erforderlichen Komponenten bereits von sich aus im richtigen Mischungsverhältnis und in homogener Verteilung enthält. Der mittlere Korndurchmesser betrug 150 μm; die Aufgabemenge 3,1 t/h. Der Ausgangsstoff war relativ alkaliarm.

Das Verfahren wurde im Prinzip wie im Beispiel 1 durchgeführt. Durch die Möglichkeit der Einführung von 75% des Drehrohrofen-Abgases in den Suspensionswärmeaustauscher 2 ergaben sich jedoch gewisse mengenmässige Änderungen bei der Luft- und Brennstoffaufgabe.

Der über 1 aufgegebene Ausgangsstoff wurde im Suspensionswärmeaustauscher 2 durch Wärmeaustausch mit den Abgasen des Zirkulationssystems und des Drehrohrofens 13 auf 800°C vorgewärmt und über Leitung 4 dem Wirbelschichtreaktor 5 aufgegeben. Der Brennstoffeintrag über Lanze 10 betrug 0,434 t/h ($H_u$ 12 MH/kg, mittlerer Korndurchmesser 200 μm). Über Leitung 8 wurden 485 $m_N^3$/h Fluidisierungsgas von 480°C und über Leitung 9 1140 $m_N^3$/h Sekundärgas von 820°C zugeführt. Die im Zirkulationssystem resultierende Temperatur betrug 1050°C. Die mittlere Suspensionsdichte oberhalb der Mündung der Sekundärgasleitung 9 lag bei 9 kg/m³, unterhalb deren Mündung bei 160 kg/m³.

Die mittlere Verweilzeit im Zirkulationssystem lag wiederum bei 8 min. Der Entsäuerungsgrad war 99,3%.

Dem Drehrohrofen 13 wurden vermittels der Entnahmevorrichtung 11 und der Leitung 12 kontinuierlich 2 t/h Kalzinat aufgegeben. Ausserdem wurden über Leitung 14 0,047 kg/h Kohle mit einer Körnung von 20% > 90 μm und einem Heizwert $H_u$ von 25 MJ/kg sowie über Leitung 19 290 $m_N^3$/h Luft von 1090°C (aus dem Rostkühler 16) eingespeist. Die Temperatur im Drehrohrofen 13 betrug 1400°C.

Nach hinreichend langer Klinkerung wurden 2 t/h Klinker über Leitung 15 in den Rostkühler 16 ausgetragen und mit insgesamt 1430 $m_N^3$/h Luft auf direktem Wege gekühlt. Die aufgeheizte Luft wurde — wie vorstehend beschrieben — auf Drehrohrofen 13 und Sekundärluft 9 aufgeteilt. Anschliessend wurde der Klinker in einem nachgeschalteten Schachtkühler 18 durch u.a. indirekte Kühlung unter Aufheizung von 485 $m_N^3$/h Luft gekühlt, die dem Wirbelschichtreaktor 5 über Leitung 8 mit einer Temperatur von 480°C zugeführt wurde. Die Klinker-Produktion betrug 2 t/h.

Das den Drehrohrofen 13 verlassende Abgas in Mengen von 300 $m_N^3$/h konnte infolge des raelativ geringen Alkaligehalts zu 75% dem Suspensionswärmeaustauscher 2 zugeführt werden. Die restlichen 25% wurden in einem Gaskühler (nicht dargestellt) gekühlt und gereinigt.

**Patentansprüche**

1. Verfahren zur Herstellung von Zementklinker durch Vorwärmen des Zementrohmehles in einem Suspensionswärmeaustauscher, Entsäuerung in einer Wirbelschicht, Klinkerung in einem Drehrohrofen und anschliessende Kühlung des Klinkers, dadurch gekennzeichnet, dass man die Entsäuerung in einem aus einem Wirbelschichtreaktor (5), einem Abscheider (6) und einer Rückführleitung (7) gebildeten Zirkulationssystem bei einer Temperatur oberhalb 850°C mit einem Entsäuerungsgrad von mindestens 95% durchführt; den für den Brenn- und Klinker-Prozess erforderlichen kohlenstoffhaltigen Brennstoff zu mindestens 65% (bezogen auf den Gesamtwärmebedarf) dem Wirbelschichtreaktor (5) und zu mindestens 10% (bezogen auf den Gesamtwärmebedarf) dem Drehrohrofen (13) zuführt; die Verbrennung des dem Wirbelschichtreaktor zugeführten Brennstoffes mit mindestens zwei Teilströmen sauerstoffhaltigen Gases, von denen einer als Fluidisierungsgas (8) und einer in einer höheren Ebene als Sekundärgas (9) zugegeben wird, zweistufig und — auf die Gesamtheit der Verbrennungsstufen bezogen — nahstöchiometrisch durchführt und durch Aufteilung der Fluidisierungsgas- und der Sekundärgasmengen sowie durch Einstellung des Volumenverhältnisses von Fluidisierungsgas zu Sekundärgas innerhalb des Bereiches von 1:1 bis 1:10 in der Zone zwischen Fluidisierungsgaszuführung (8) und Sekundärgaszuführung (9) eine mittlere Suspensionsdichte von 100 bis 300 kg/m³ und in der Zone oberhalb der Sekundärgaszuführung (9) eine mittlere Suspensionsdichte von 5 bis 30 kg/m³ einstellt.

2. Verfahren nach Anspruch 1, dadurch gekennzeichnet, dass man den für den Brenn- und Klinker-Prozess erforderlichen Brennstoff zu 70 bis 85% (bezogen auf den Gesamtwärmebedarf) dem Wirbelschichtreaktor (5) und zu 15 bis 30% (bezogen auf den Gesamtwärmebedarf) dem Drehrohrofen (13) zuführt.

3. Verfahren nach Anspruch 1, dadurch gekennzeichnet, dass man die Verweilzeit des Feststoffes im Zirkulationssystem auf 3 bis 15, vorzugsweise 5 bis 10, Minuten einstellt.

4. Verfahren nach Anspruch 1 oder 3, dadurch gekennzeichnet, dass man die Temperatur im Zirkulationssystem auf einen Wert im Bereich von 950 bis 1150°C einstellt.

5. Verfahren nach Anspruch 1, 3 oder 4, dadurch gekennzeichnet, dass man bei Verwendung fester kohlenstoffhaltiger Brennstoffe die Körnung auf einen Korndurchmesser $d_p$ 50 < 500 μm, vorzugsweise auf einen Wert im Bereich von 100 bis 300 μm, einstellt.

6. Verfahren nach Anspruch 1, dadurch gekennzeichnet, dass man die Kühlung des Klinkers unter Aufheizung von sauerstoffhaltigem Gas, das mindestens teilweise dem Wirbelschichtreaktor (5) zugeleitet wird, vornimmt.

7. Verfahren nach Anspruch 6, dadurch gekennzeichnet, dass man die Kühlung des Klinkers mit sauerstoffhaltigem Gas, das sowohl direkt als auch indirekt aufgeheizt wird, vornimmt.

8. Verfahren nach Anspruch 6 oder 7, dadurch gekennzeichnet, dass man mindestens einen Teil des bei der Kühlung des Klinkers indirekt aufgeheizten sauerstoffhaltigen Gases dem Wirbelschichtreaktor (5) als Fluidisierungsgas (8) und mindestens einen Teil des bei der Kühlung des Klinkers direkt aufgeheizten sauerstoffhaltigen Gases dem Wirbelschichtreaktor (5) als Sekundärgas (9) zuführt.

## Claims

1. Process for the production of cement clinker comprising preheating the raw cement powder in a suspension-type heat exchanger, de-acidifying in a fluidized bed, clinkering in a rotary kiln, and subsequently cooling the clinker, characterized in that a de-acidification is effected in a circulation system comprising a fluidized bed reactor (5), a cyclone separator (6) and a recycling duct (7) at a temperature above 850°C to at least 95%, the fuel required for the clacining and clinkering processes is fed in an amount of at least 65% (related to the total heat requirement) to the de-acidifying fluidized bed reactor (5) and in an amount of at least 10% (related to the total heat requirement) to the rotary kiln (13); the fuel supplied to the de-acidifying fluidized bed reactor (5) is near stoichiometrically burnt in two combustion stages with at least two partial streams of oxygen-containing gas, one of said streams is supplied as fluidizing gas (8) and the other is supplied on a higher level as secondary gas (9), and the ratio of the rates and volumes of fluidizing gas to secondary gas is maintained in the range from 1:1 to 1:10 so that a mean suspension density of 100 to 300 kg/m$^3$ is maintained in the zone between the inlet (8) for fluidizing gas and the inlet (9) for secondary gas, and a mean suspension density of 5 to 30 kg/m$^3$ is maintained above the inlet (9) for secondary gas.

2. Process according to claim 1, characterized in that the fuel required for the calcining and clinkering process is supplied at the rate of 70 to 85% (related to the total heat requirement) to the fluidized bed reactor (5) and at the rate of 15 to 30% (related to the total heat requirement) to the rotary kiln (13).

3. Process according to claim 1, characterized in that the residence time of the solids in the circulation system is adjusted to 3 to 15 minutes, preferably 5 to 10 minutes.

4. Process according to claim 1 or 3, characterized in that a temperature in the range of 950 to 1150°C is adjusted in the circulation system.

5. Process according to claim 1, 3 or 4, characterized in that a median particle diameter d$_p$ 50 below 500 μm, preferably in the range of 100 to 300 μm, is adjusted, if solid carbonaceous fuels are used.

6. Process according to claim 1, characterized in that the cooling of the clinker is effected by heating of oxygen-containing gas, at least part of which is supplied to the fluidized bed reactor (5).

7. Process according to claim 6, characterized in that the cooling of the clinker is effected by oxygen-containing gas, which is thus heated directly and indirectly.

8. Process according to claim 6 or 7, characterized in that at least part of the oxygen-containing gas which has been indirectly heated in cooling the clinker is supplied as fluidizing gas (8) to the fluidized bed reactor (5) and at least part of the oxygen-containing gas which has been heated in direct contact with the clinker to be cooled is supplied as secondary gas (9) to the fluidized bed reactor (5).

## Revendications

1. Procédé de préparation du clinker de ciment par préchauffage de la farine crue de ciment dans un échangeur de chaleur à suspension, par décarbonatation dans un lit fluidisé, par clinkérisation dans un four tubulaire rotatif, et ensuite par refroidissement du clinker, caractérisé en ce qu'il consiste:

à effectuer la décarbonatation dans un système de circulation constitué d'un réacteur à lit fluidisé (5), d'un cyclone séparateur (6) et d'un conduit de retour (7), à une température supérieure à 850°C, avec un degré de décarbonatation d'au moins 95%;

à envoyer le combustible carboné nécessaire au processus de calcination et de clinkérisation, pour au moins 65% (rapportés au besoin de chaleur total) au réacteur à lit fluidisé (5), et pour au moins 10% (rapportés au besoin de chaleur total) au four tubulaire rotatif (13);

à effectuer, en deux stades et — rapportée à l'ensemble des stades de combustion — presque stoechiométriquement, la combustion du combustible amené au réacteur à lit fluidisé, par au moins deux courants partiels de gaz contenant de l'oxygène, dont l'un est amené à titre de gaz de fluidisation (8) et l'autre à titre de gaz secondaire (9), dans un plan plus élevé, et à ajuster en répartissant les quantités de gaz de fluidisation et de gaz secondaire, ainsi qu'en réglant le rapport volumique du gaz de fluidisation au gaz secondaire dans la plage comprise entre 1:1 à 1:10 dans la zone comprise entre l'admission du gaz de fluidisation (8) et l'admission du gaz secondaire (9), à une densité de suspension moyenne de 100 à 300 kg/m$^3$ et dans la zone située au-dessus de l'admission du gaz secondaire une densité moyenne de suspension de 5 à 30 kg/m$^3$.

2. Procédé suivant la revendication 1, caractérisé en ce qu'il consiste à envoyer comme combustible nécessaire au processus de calcination et de clinkérisation, pour 70 à 85% (rapportés au besoin total de chaleur) au réacteur à lit fluidisé (5), et pour 15 à 30% (rapportés au besoin total de chaleur) au four tubulaire rotatif (13).

3. Procédé suivant la revendication 1, caractérisé en ce qu'il consiste à régler le temps de séjour de la matière solide dans le système de circulation entre 3 et 15 minutes et, de préférence, entre 5 et 10 minutes.

4. Procédé suivant la revendication 1 ou 3, caractérisé en ce qu'il consiste à régler la température du système de circulation à une valeur comprise entre 950 et 1150°C.

5. Procédé suivant la revendication 1, 3 ou 4, caractérisé en ce qu'il consiste à régler, quand on utilise du combustible carboné solide, la granulométrie à un diamètre de grains $d_p$ 50 < 500 microns et, de préférence à une valeur comprise entre 100 et 300 microns.

6. Procédé suivant la revendication 1, caractérisé en ce qu'il consiste à effectuer le refroidissement du clinker en chauffant du gaz contenant de l'oxygène qui est envoyé, au moins en partie, au réacteur à lit fluidisé (5).

7. Procédé suivant la revendication 6, caractérisé en ce qu'il consisté à effectuer le refroidissement du clinker par du gaz contenant de l'oxygène, qui est réchauffé tant directement qu'indirectement.

8. Procédé suivant la revendication 6 ou 7, caractérisé en ce qu'il consiste à envoyer au réacteur à lit fluidisé (5) à titre de gaz de fluidisation (8), au moins une partie du gaz contenant de l'oxygène chauffé indirectement lors du refroidissement du clinker, et au réacteur à lit fluidisé (5) à titre de gaz secondaire (9), au moins une partie du gaz contenant de l'oxygène chauffé directement lors du refroidissement du clinker.